# EUROPÄISCHE PATENTSCHRIFT

(11) **EP 2 093 419 B1**
(45) Veröffentlichungstag und Bekanntmachung des Hinweises auf die Patenterteilung: **02.08.2017**
(21) Anmeldenummer: 09000999.4
(22) Anmeldetag: 24.01.2009
(51) Int. Cl.: F03D 7/02, F03D 7/04

(54) **Verfahren zum Betreiben einer Windenergieanlage und Windenergieanlage**
Method of controlling a wind turbine and wind turbine
Procédé de régulation d'une éolienne et éolienne

(30) Priorität: 22.02.2008 DE 102008010543
(43) Veröffentlichungstag der Anmeldung: 26.08.2009
(73) Patentinhaber: Nordex Energy GmbH, 22419 Hamburg (DE)
(72) Erfinder: Harms, Ulrich, 22399 Hamburg (DE); Kabatzke, Wolfgang, 21502 Geesthacht (DE); Jurkat, Mark, 22844 Norderstedt (DE)
(74) Vertreter: Hauck Patentanwaltspartnerschaft mbB

(56) Entgegenhaltungen:
- EP-A2- 1 798 413
- DE-A1- 4 241 631
- JP-A- 2007 231 778
- US-A- 4 161 658

## Beschreibung

Die Erfindung betrifft ein Verfahren zum Betreiben einer Windenergieanlage und eine Windenergieanlage, die einen Rotor mit mindestens einem Rotorblatt, dessen Blatteinstellwinkel einstellbar ist, einen mit dem Rotor gekoppelten Generator, und eine Regeleinrichtung aufweist, die bei einer Abweichung der Rotor- oder Generatordrehzahl von einer Solldrehzahl den Blatteinstellwinkel des mindestens einen Rotorblatts so einstellt, dass wieder die Solldrehzahl erreicht wird.

Bei Störungen des von der Windenergieanlage gespeisten elektrischen Netzes kann es zu einem plötzlichen Lastabwurf kommen, bei dem das Generatormoment oder die Generatorleistung der Anlage innerhalb sehr kurzer Zeit auf Null fällt. Darüber hinaus ist es auch möglich, beispielsweise mit einer entsprechenden Steuereinrichtung der Anlage, eine von der Anlage über den Generator in ein elektrisches Netz zur Verfügung gestellte elektrische Größe durch eine Verringerung eines Vorgabewerts, wie des vorgegebenen Generatormoments bzw. der vorgegebenen Generatorleistung, gesteuert in kurzer Zeit auf einen vorgegebenen Wert zu reduzieren. Eine kurze Zeit meint in diesem Zusammenhang einen Zeitraum von weniger als einer Minute, insbesondere weniger als einer halben Minute.

So werden mit steigender Bedeutung der regenerativen Energien von Energieversorgungsunternehmen zunehmend dieselben technischen Anforderungen an Windenergieanlagen bzw. Windparks gestellt wie an konventionelle Kraftwerke. Ein Beispiel ist die Forderung nach einem Beitrag von Windenergieanlagen zur schnellen Verminderung eines Leistungsüberschusses im Stromnetz. Dazu wird ein entsprechendes Signal von dem Energieversorger gesandt, welches ein definiertes Leistungsniveau vorgibt. Ein solches Signal kann unabhängig von anderen Vorgaben, z.B. Sollwerten der Wirkleistung sein. Es besteht dabei zunehmend der Wunsch der Versorgungsunternehmen, die von der Anlage in das Netz eingespeiste elektrische Energie sehr schnell zu reduzieren. In einigen Ländern werden Zeiten von wenigen Sekunden, z.B. fünf Sekunden, für eine Reduzierung der Last auf beispielsweise 20 % der Netzanschlusskapazität diskutiert oder bereits gefordert.

Um die strengen Zeitvorgaben zu erfüllen, muss die zur Verfügung gestellte elektrische Größe durch eine sehr schnelle Reduzierung des Generatormoments bzw. der Generatorleistung verringert werden. Durch diese Reduzierung der durch den Generator erzeugten Gegenlast wird jedoch der Rotor der Windenergieanlage beschleunigt und es kommt zu Drehzahlen, die die Regeleinrichtung zum Eingreifen durch eine Vergrößerung des Rotorblatteinstellwinkels bewegt. Der Blatteinstellwinkel ist eine konstruktive Größe, nämlich der Winkel zwischen der Rotorebene und der Profilsehne des Rotorblatts. Sobald die Regeleinrichtung eine Abweichung der Drehzahl des Rotors oder Generators von der Solldrehzahl feststellt, reagiert sie mit einer Änderung des Blatteinstellwinkels. Die Regeleinrichtung ist allerdings auf die normalerweise auftretenden Windturbulenzen ausgelegt. Bei einem sehr schnellen Lastabwurf ist die Regelung zu träge. Dadurch kann es zu schädlichen Überdrehzahlen des Rotors bzw. Generators kommen. Um dies zu vermeiden, kann das Generatormoment bzw. die Generatorleistung nur mit begrenzter Geschwindigkeit abgesenkt werden. Die Erfüllung der strengen Anforderungen der Versorgungsunternehmen ist mit den derzeitigen Systemen daher schwierig.

Insbesondere bei Windparks besteht darüber hinaus das Problem, dass die Anforderung zur Reduzierung der zur Verfügung gestellten Gesamtwirkleistung durch einen Windparkregler intelligent auf die einzelnen Windenergieanlagen aufgeteilt werden muss. Das Entgegennehmen, die Auswertung und die Übermittlung der einzelnen Sollsignale an die Anlagen durch den Windparkregler nimmt Zeit in Anspruch, die anschließend den Windenergieanlagen zur Reduzierung der Last nicht mehr zur Verfügung steht. Das oben genannte Problem verschärft sich also bei Anlagen in Windparks.

Beispielsweise eine Änderung der Windenergieanlagenwirkleistung auf 20 % der Nennleistung innerhalb weniger Sekunden, beispielsweise fünf Sekunden, ist mit den bekannten Systemen nicht möglich. Die Alternative, eine Absenkung der zur Verfügung gestellten elektrischen Größe durch eine Trennung der Anlage vom Netz, also einem Abschalten, zu realisieren, ist oftmals unerwünscht. Insbesondere ist ein Abschalten der Anlage nur unter bestimmten Ausnahmebedingungen zulässig.

Aus CA 2644019 A1 sind eine Windenergieanlage und deren Steuerung bekannt. Die Windenergieanlage besitzt eine Steuereinheit, die mit einer ersten Steuerung die Ausgangsleistung abhängig von einer vorbestimmten Leistungskennlinie steuert, bis die Drehzahl bis auf einen vorbestimmten Drehzahlwert angestiegen ist, und in einer zweiten Steuerung die Ausgangsleistung der Windenergieanlage auf einen vorbestimmten Nennwert steuert, wenn die Drehzahl die vorbestimmte Drehzahl überschreitet.

Ausgehend von dem erläuterten Stand der Technik lag der Erfindung daher die Aufgabe zugrunde, ein Verfahren und eine Windenergieanlage zur Verfügung zu stellen, mit denen eine schnelle Lastreduzierung auf einen neuen stabilen Arbeitspunkt ohne eine Netztrennung möglich ist.

Diese Aufgabe wird gemäß der Erfindung durch die Gegenstände der unabhängigen Ansprüche 1 und 11 gelöst. Vorteilhafte Ausgestaltungen finden sich in den abhängigen Ansprüchen sowie der Beschreibung und der Zeichnung.

Die Erfindung löst die Aufgabe zum einen durch ein Verfahren zum Betreiben einer Windenergieanlage, die einen Rotor mit mindestens einem Rotorblatt, dessen Blatteinstellwinkel einstellbar ist, einen mit dem Rotor gekoppelten Generator, und eine Regeleinrichtung, die bei einer Abweichung der Rotor- oder Generatordrehzahl von einer Solldrehzahl den Blatteinstellwinkel des mindestens einen Rotorblatts so einstellt, dass wieder die Solldrehzahl erreicht wird, aufweist, bei welchem Verfahren eine von der Windenergieanlage über den Generator in ein elektrisches Netz zur Verfügung gestellte elektrische Größe durch eine Verringerung eines Vorgabewerts für den Generator in kurzer Zeit auf einen vorgegebenen Wert reduziert wird, und wobei vorrauschauend eine Einstellung des mindestens einen Rotorblatts auf einen neuen Blatteinstellwinkel angesteuert wird, bei dem die Rotor- oder Generatordrehzahl bei der reduzierten elektrischen Größe und der aktuellen Windgeschwindigkeit, also der auf den Rotor wirkenden Windgeschwindigkeit, die Solldrehzahl annimmt.

Die Erfindung löst die Aufgabe außerdem durch eine Windenergieanlage mit einem Rotor mit mindestens einem Rotorblatt, dessen Blatteinstellwinkel einstellbar ist, mit einem mit dem Rotor gekoppelten Generator, und mit einer Regeleinrichtung, die dazu ausgebildet ist, bei einer Abweichung der Rotor- oder Generatordrehzahl von einer Solldrehzahl den Blatteinstellwinkel des mindestens einen Rotorblatts so einzustellen, dass wieder die Solldrehzahl erreicht wird, und mit einer Steuereinrichtung, die dazu ausgebildet ist, eine von der Windenergieanlage über den Generator in ein elektrisches Netz zur Verfügung gestellte elektrische Größe durch eine Verringerung eines Vorgabewerts für den Generator in kurzer Zeit auf einen vorgegebenen Wert zu reduzieren, wobei die Steuereinrichtung weiterhin dazu ausgebildet ist, eine Einstellung des mindestens einen Rotorblatts auf einen neuen Blatteinstellwinkel einzuleiten, bevor die Regeleinrichtung aufgrund der Verringerung des Vorgabewerts eine Abweichung der Rotor- oder Generatordrehzahl von der Solldrehzahl feststellt, wobei bei dem neuen Blatteinstellwinkel die Rotor- oder Generatordrehzahl bei der reduzierten elektrischen Größe und der aktuellen Windgeschwindigkeit die Solldrehzahl annimmt. Die von der Regeleinrichtung festgestellte Abweichung der Rotor- oder Generatordrehzahl von der Solldrehzahl ist dabei eine Abweichung, die ausreichend hoch ist, um einen Regelvorgang auszulösen. Die Solldrehzahl kann die Nenndrehzahl des Generators bzw. Rotors sein. Der Vorgabewert ist ein dem Generator vorgegebener Wert, um eine gewünschte von der Anlage tatsächlich zur Verfügung gestellte elektrische Größe, beispielsweise Wirkleistung, zu erreichen.

Bei einem Signal zur schnellen Lastreduzierung wird also eine möglichst schnelle Reduzierung des Vorgabewerts, beispielsweise des Generatormoments oder der Generatorleistung, und damit der elektrischen Größe vorgenommen. Damit es dabei zu keiner schädlichen Überdrehzahl des Rotors bzw. Generators kommen kann, wird erfindungsgemäß zeitgleich oder zeitlich zuvorkommend eine Einstellung auf einen neuen, größeren Blatteinstellwinkel eingeleitet. Der Pitchwinkel wird also vorausschauend erhöht, um die Leistungsaufnahme des Rotors zu verringern und so eine unerwünschte Erhöhung der Drehzahl aufgrund des verringerten Vorgabewerts zu vermeiden. Erfindungsgemäß findet ein Zusammenspiel des Stellers zur Reduzierung der elektrischen Größe und dem Blattwinkelsteller statt. Dabei bleibt die Windenergieanlage während der schnellen Lastreduzierung am Netz. Eine Netztrennung findet nicht statt.

Die elektrische Größe kann auf den Wert Null oder einen von Null verschiedenen Wert reduziert werden. Der dabei einzustellende neue Blattwinkel kann anhand der Vorgabe für die elektrische Größe, der aktuellen Drehzahl des Rotors bzw. Generators, dem aktuellen Blattwinkel und dem Betriebszustand der Anlage ermittelt werden. Dies ist insbesondere vorteilhaft bei einer Reduzierung der elektrischen Größe auf einen Wert ungleich Null.

Zur Messung der Windgeschwindigkeit kann die Windenergieanlage eine geeignete Messeinrichtung besitzen. Die bei der Windenergieanlage eingesetzte Regelung kann beispielsweise mit zwei verkoppelten Reglern arbeiten, nämlich einem Umrichterregler und einem Pitchregler. Das Ziel des Gesamtsystems ist es, im normalen Betrieb eine optimale Leistungsabgabe der Anlage an das Netz zu bewerkstelligen. Erreicht die Windgeschwindigkeit die Nennwindgeschwindigkeit, so ist ab diesem Zeitpunkt beispielsweise die Wirkleistungsabgabe der Anlage auf die Nennleistung zu regeln bzw. zu begrenzen. Dabei können die Anlagen beispielsweise als sogenannte drehzahlgeregelte Anlagen arbeiten, bei denen ab Nennwindgeschwindigkeit und erreichter Nennwirkleistung die Drehzahl der Anlage konstant gehalten wird. Die beiden Regler der Anlage arbeiten dabei bedingt zusammen, d.h. über die Nennleistung und spezielle Anlagen-Systemzustände (z.B. Aufschalten, Hysterese) ist das Zusammenspiel der Regler eindeutig definiert.

Die Erfindung bezieht sich auf Sonderbetriebszustände, für die die Regelung der Anlage nicht ausgelegt ist, und erreicht durch einen Eingriff in die Blattwinkeleinstellung eine Erhöhung der Sicherheit der Anlage. Insbesondere ist erfindungsgemäß eine Lastredzierung auf einen stabilen Leistungswert in einer kurzen Zeit möglich, beispielsweise weniger als einer Minute, insbesondere weniger als einer halbe Minute, bevorzugt maximal zehn Sekunden, insbesondere maximal fünf Sekunden oder weniger als 5 Sekunden. Der vorgegebene Wert der reduzierten elektrischen Größe kann beispielsweise 60%, bevorzugt 40%, weiter bevorzugt 20 % des Nennbetrags der elektrischen Größe betragen. Anschließend bleibt der Sollwert der elektrischen Größe bis auf Widerruf auf dem vorgegebenen reduzierten Wert. Das erfindungsgemäße Verfahren bzw. die erfindungsgemäße Anlagensteuerung können auch bei einer schnellen Erhöhung der von der Anlage zur Verfügung zu stellenden elektrischen Größe vorteilhaft zum Einsatz kommen, indem beispielsweise der Blatteinstellwinkel vorausschauend verringert wird, um die Leistungsaufnahme der Anlage schnell zu erhöhen.

Es ist möglich, die Einstellung des neuen Blatteinstellwinkels durch die Regeleinrichtung durchzuführen. Das Einstellen des neuen Blattwinkels wird dann durch die Steuereinrichtung lediglich ausgelöst. Die Regelung kann also während der Ansteuerung des neuen Blatteinstellwinkels aktiv bleiben. Die Steuer- und Regeleinrichtung können eine gemeinsame Einrichtung bilden. Es ist möglich, für den vorgegebenen Wert der reduzierten elektrischen Größe den neuen Blatteinstellwinkel zu ermitteln. Die Steuereinrichtung der Anlage kann dazu entsprechend ausgebildet sein. Zur Ermittlung dieses neuen Blatteinstellwinkels können beispielsweise Kennfelder und/oder Funktionen in der Anlagensteuerung hinterlegt sein. Üblicherweise hat der Rotor der Windenergieanlage mehr als ein Rotorblatt, beispielsweise drei Rotorblätter. Dann können entsprechend die Blatteinstellwinkel aller Rotorblätter in der erfindungsgemäßen Weise eingestellt werden. Ebenso kann die Windenergieanlage Teil eines Windparks sein, wobei die Anlagen des Windparks durch einen Windparkregler gesteuert werden.

Die erfindungsgemäße Windenergieanlage kann zur Durchführung des erfindungsgemäßen Verfahrens geeignet sein.

Besonders praxisgemäß ist es, wenn der Vorgabewert das vorgegebene Generatormoment oder die vorgegebene Generatorleistung ist. Nach einer weiteren besonders praxisgemäßen Ausgestaltung kann die elektrische Größe die tatsächlich zur Verfügung gestellte Wirkleistung der Windenergieanlage sein. Nach einer weiteren Ausgestaltung kann die Einstellung des neuen Blatteinstellwinkels erfolgen, indem eine der Regeleinrichtung zugeführte Solldrehzahl um einen definierten Offset verringert wird. Der Pitchregler bildet die Differenz aus einer ihm zugeführten Solldrehzahl und einer ihm beispielsweise von einer Messeinrichtung zugeführten Ist-Drehzahl des Rotors bzw. Generators. Sofern eine Abweichung festgestellt wird, wird durch den Regler der Pitchwinkel verändert. Durch die Subtraktion eines Offset-Signals von der dem Regler zugeführten Solldrehzahl kann in dem Regler sehr schnell eine große Soll-Ist-Abweichung erzeugt werden, die zu einem entsprechend schnellen Regelvorgang durch den Regler führt. Zur Einstellung des neuen Blatteinstellwinkels findet also in besonders einfacher Weise eine Störgrößenaufschaltung statt. Gemäß einer alternativ oder zusätzlich anwendbaren Vorgehensweise zur Einstellung des neuen Blatteinstellwinkels kann eine der Regeleinrichtung zugeführte Ist-Drehzahl um einen definierten Offset erhöht werden. Der Regeleinrichtung wird darüber hinaus üblicherweise ein minimaler und maximaler Blatteinstellwinkel vorgegeben, die den Stellbereich des Reglers begrenzen. So kann der Regler nur Einstellwinkel innerhalb der durch die minimalen und maximalen Winkel gebildeten Grenzen vorgeben. Der maximale Blattwinkel ist dabei üblicherweise für alle Betriebszustände ca. 90°, d.h. Fahnenstellung des Rotorblatts. Der minimale Blattwinkel ist abhängig vom Betriebszustand der Anlage. Im normalen Produktionsbetrieb beträgt er üblicherweise 0°. Eine alternative oder zusätzliche Möglichkeit zur Einstellung des neuen Blatteinstellwinkels liegt also darin, den der Regeleinrichtung zugeführten minimalen Blatteinstellwinkel um einen definierten Offset zu erhöhen. Auch mit dieser Ausgestaltung kann in besonders einfacher Weise schnell ein Regelvorgang initiiert werden.

Durch Beaufschlagen einer Eingangsgröße der Regeleinrichtung mit einem definierten Offset, also einem definierten Wert, ist eine schnelle Beeinflussung der Regeleinrichtung möglich. Der Offset ist dabei so definiert, dass der jeweils gewünschte Blatteinstellwinkel schnell eingestellt wird. Die Offsets können beispielsweise empirisch ermittelt werden und in Kennfeldern hinterlegt werden. Es ist möglich, nur eine oder aber mehrere der Eingangsgrößen der Regeleinrichtung mit einem entsprechenden Offset zu beaufschlagen. Der Offset kann nach einer definierten Zeit und/oder der Unterschreitung einer vorgegebenen Generator- oder Rotorgrenzdrehzahl wieder zurückgenommen werden. Gemäß einer weiteren Ausgestaltung kann der Offset von einem anfänglichen Maximalwert mit der Zeit bis auf Null reduziert werden. Bei dieser Ausgestaltung wird die Regeleinrichtung mit der Zeit also wieder auf ihren Normalbetrieb mit den normalen Eingangsgrößen zum Ausgleich von Windschwankungen zurückgeführt, indem der aufgeschaltete Offset über der Zeit auf Null zurückgeführt wird.

Dies soll anhand eines Beispiels für die Beaufschlagung der Eingangsgröße des minimalen Blatteinstellwinkels veranschaulicht werden:
Zur Ermittlung eines neuen, der Regeleinrichtung vorzugebenden minimalen Blatteinstellwinkels kann der aktuelle Ist-Blattwinkel um einen entsprechenden Blattwinkeloffset erhöht werden. Von diesem so ermittelten neuen minimalen Blattwinkel kann dann eine Größe A abgezogen werden. Die Größe A ist zeitlich veränderlich und wird in Form einer zeitlichen Rampe oder einer Funktion von Null bis auf einen Wert, der gleich dem Blattwinkeloffset ist, erhöht. Auf diese Weise wird der Blattwinkeloffset von seinem anfänglichen Maximalwert mit der Zeit wieder auf Null reduziert. Die Größe A kann so eingestellt werden, dass die Drehzahl nicht unter die Nenndrehzahl fällt.

Der jeweils aufzuschaltende Offset kann mittels mindestens eines Kennfelds ermittelt werden, das dazu in der Steuereinrichtung der Anlage hinterlegt sein kann. Ein solches Kennfeld kann beispielsweise die zur Erreichung der Solldrehzahl der Rotor- bzw. Generatordrehzahl erforderlichen Blatteinstellwinkel abhängig von unterschiedlichen Windgeschwindigkeiten für unterschiedliche vorgegebene elektrische Größen, beispielsweise Wirkleistungen, enthalten. Alternativ ist es auch möglich, den Offset mittels mindestens einer Funktion zu berechnen, die dazu in der Steuereinrichtung hinterlegt sein kann. Eine solche Funktion kann beispielsweise den für eine Solldrehzahl erforderlichen Blatteinstellwinkel abhängig von unterschiedlichen Windgeschwindigkeiten für unterschiedliche vorgegebene elektrische Größen, beispielsweise Wirkleistungen, mathematisch beschreiben.

Nach einer weiteren Ausgestaltung ist es möglich, dass die Einstellung auf den neuen Blatteinstellwinkel nur eingeleitet wird, wenn die Rotor- oder Generatordrehzahl oberhalb einer Grenzdrehzahl liegt und/oder wenn der Vorgabewert, also beispielsweise das Generatormoment oder die Generatorleistung, vor der Verringerung oberhalb eines Grenzvorgabewerts, also beispielsweise eines Grenzgeneratormoments oder einer Grenzgeneratorleistung, liegt. Dazu kann die Steuereinrichtung eine Vergleichseinrichtung aufweisen zum Vergleichen der Rotor- oder Generatordrehzahl mit einer Grenzdrehzahl bzw. des Vorgabewerts mit einem Grenzvorgabewert. Insbesondere wenn der Blatteinstellwinkel beispielsweise 0° beträgt, kann ein schneller Lastabwurf nur bei einer Drehzahl des Rotors bzw. Generators nahe der Nenndrehzahl zu einer unerwünschten Überdrehzahl führen. Daher ist in einem solchen Fall die Einstellung auf einen neuen Blatteinstellwinkel erst ab einer verfahrens- und anlagenabhängigen Grenzdrehzahl bzw. eines verfahrens- und anlagenabhängigen Grenzvorgabewerts nötig. Der Grenzwert kann beispielsweise die Nenndrehzahl, oder ein bestimmter Prozentsatz des Nennmoments oder der Nennleistung sein. Der Grenzwert kann dann mit abnehmender Differenz zwischen der Nenndrehzahl, dem Nennmoment bzw. der Nennleistung und der Ist-Drehzahl, des Ist-Moments bzw. der Ist-Leistung zunehmen.

Ein Ausführungsbeispiel der Erfindung wird nachfolgend von Zeichnungen näher erläutert. Es zeigen schematisch
- Figur 1:: ein Blockdiagramm zur Veranschaulichung der Funktion der erfindungsgemäßen Windenergieanlage, und
- Figur 2:: ein Kennlinienfeld zur Veranschaulichung der Funktion des erfindungsgemäßen Verfahrens und der erfindungsgemäßen Windenergieanlage.

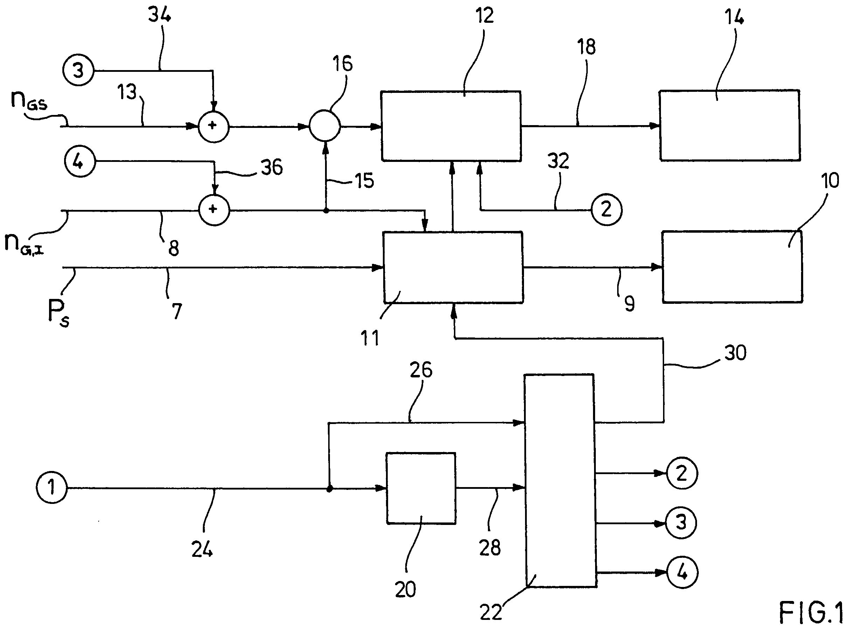

In Figur 1 ist ein Blockschaltbild zur Veranschaulichung der Funktion der erfindungsgemäßen Windenergieanlage gezeigt. Die Windenergieanlage besitzt in an sich bekannter Weise einen nicht näher dargestellten Triebstrang, der an seinem vorderen Ende einen ebenfalls nicht dargestellten Rotor mit mindestens einem, bevorzugt drei, nicht dargestellten Rotorblättern, trägt und der an seinem hinteren Ende in eine sogenannte Generator-Umrichtereinheit mündet. Die Generator-Umrichtereinheit weist einen nicht dargestellten Generator, einen Umrichter 10 und einen den Umrichter 10 über einen Steuerkanal 9 ansteuernden Umrichterregler 11 auf. Mittels des Umrichterreglers 11 ist die von der Anlage tatsächlich zur Verfügung gestellte Wirkleistung einstellbar. Die Generator-Umrichtereinheit ist nicht notwendigerweise als eine konstruktive oder bauliche Einheit ausgebildet, sondern bezeichnet lediglich Generator und Umrichter mit Umrichterregler, die miteinander zusammenwirken, um die gewünschte elektrische Größe der Windenergieanlage, beispielsweise die Wirkleistung, bereitzustellen. Als Eingangsgrößen erhält der Umrichterregler 11 dabei eine Sollwirkleistung P_{S} sowie eine Ist-Generatordrehzahl n_{GI}, wie durch Kanäle 7, 8 veranschaulicht.

Der Blatteinstellwinkel des bzw. der Rotorblätter ist über eine Regeleinrichtung 12, im vorliegenden Beispiel einen Blatteinstellwinkelregler 12 (auch: Pitchregler), und eine Blatteinstellwinkelsteuereinrichtung 14 (auch: Pitchansteuerung) verstellbar. Über den Blatteinstellwinkel kann die Drehzahl des Generators bzw. Rotors gesteuert werden, so dass der Blatteinstellwinkelregler 12 als Drehzahlregler 12 wirkt. Der Blatteinstellwinkelregler 12 erhält als Eingangsgrößen für die Regelung eine Soll-Generatordrehzahl n_{GS} über Kanal 13 und die Ist-Generatordrehzahl n_{GI} über einen Kanal 15 zugeführt, wie in Figur 1 durch Knoten 16 veranschaulicht. Außerdem erhält der Blatteinstellwinkelregler 12 einen maximalen und minimalen Blatteinstellwinkel, die den zulässigen Regelbereich für den Blatteinstellwinkel begrenzen. Entsprechend den Eingangsgrößen steuert der Blatteinstellwinkelregler 12 die Blatteinstellwinkelsteuereinrichtung 14 über den Kanal 18 an.

Wird eine schnelle Reduzierung der von der Anlage in ein elektrisches Netz zur Verfügung gestellten elektrischen Größe, beispielsweise der Wirkleistung, verlangt, so wird dieses Signal (1) zur schnellen Reduzierung, gegebenenfalls über eine mögliche Verzögerung 20, über Kanäle 24 und 26 bzw. 24 und 28 einer Steuereinrichtung 22 mit einem Auswerteprogramm zugeführt. Die Steuereinrichtung 22 steuert über einen Kanal 30 den Umrichterregler 11 direkt an, um die gewünschte Reduzierung der elektrischen Größe einzuleiten. Um einen damit verbundenen unerwünschten Anstieg der Generator- oder Rotordrehzahl zu vermeiden, können von der Steuereinrichtung 22 gleichzeitig mit oder zeitlich zuvorkommend der Einleitung der Reduzierung der elektrischen Größe ein Offset (2) für den minimalen Blatteinstellwinkel, ein Offset (3) für die Soll-Generatordrehzahl n_{GS} und/oder ein Offset (4) für die Ist-Generatordrehzahl n_{GI} erzeugt werden, bevor der Blatteinstellwinkelregler 12 eine Abweichung der Rotor- oder Generatordrehzahl von einer Solldrehzahl feststellt.

Der Offset (2) für den minimalen Blatteinstellwinkel kann dem Blatteinstellwinkelregler 12 direkt zugeführt werden, wie durch Kanal 32 gezeigt. Dieser Offset (2) für den minimalen Blatteinstellwinkel kann so gewählt werden, dass der neue minimale Blatteinstellwinkel über dem jeweils anliegenden Ist-Blattwinkel liegt. Ebenso kann der Offset (3) der Soll-Generatordrehzahl n_{GS} zu der Soll-Generatordrehzahl n_{GS} addiert werden, wie durch den Kanal 34 gezeigt. Der Offset (3) kann insbesondere negativ sein, so dass die dem Blatteinstellwinkelregler 12 zugeführte Solldrehzahl durch den Offset (3) reduziert wird. Anschließend wird die um den Offset (3) veränderte Soll-Generatordrehzahl dem Blatteinstellwinkelregler 12 zugeführt. Schließlich kann der Offset (4) für die Ist-Generatordrehzahl n_{GI} zu der Ist-Generatordrehzahl n_{GI} addiert werden, wie durch Kanal 36 veranschaulicht. Die um den insbesondere positiven Offset (4) erhöhte Ist-Generatordrehzahl n_{GI} wird dann über Kanal 15 und Knoten 16 dem Blatteinstellwinkelregler 12 zugeführt.

Das Erzeugen und Zuführen der Offsets (2), (3) und/oder (4) zu dem Blatteinstellwinkelregler 12 führt jeweils dazu, dass dieser die Blatteinstellwinkelsteuereinrichtung 14 so ansteuert, dass diese den Blatteinstellwinkel der Rotorblätter erhöht, um die Generator- bzw. Rotordrehzahl zu verringern. Auf diese Weise werden durch die schnelle Leistungsreduzierung unter Umständen hervorgerufene schädliche Überdrehzahlen des Generators bzw. Rotors vorbeugend vermieden. Die Offsets (2), (3) und (4) können alternativ oder in beliebiger Kombination miteinander erzeugt und dem Blatteinstellwinkelregler 12 zugeleitet werden. Die Höhe der Offsets (2), (3) und (4) wird dabei von der Steuereinrichtung 22 so gewählt, dass die Rotor- oder Generatordrehzahl aufgrund der bewirkten Einstellung auf einen neuen Blatteinstellwinkel bei der jeweils erforderlichen Leistungsreduzierung wieder die Solldrehzahl annimmt.

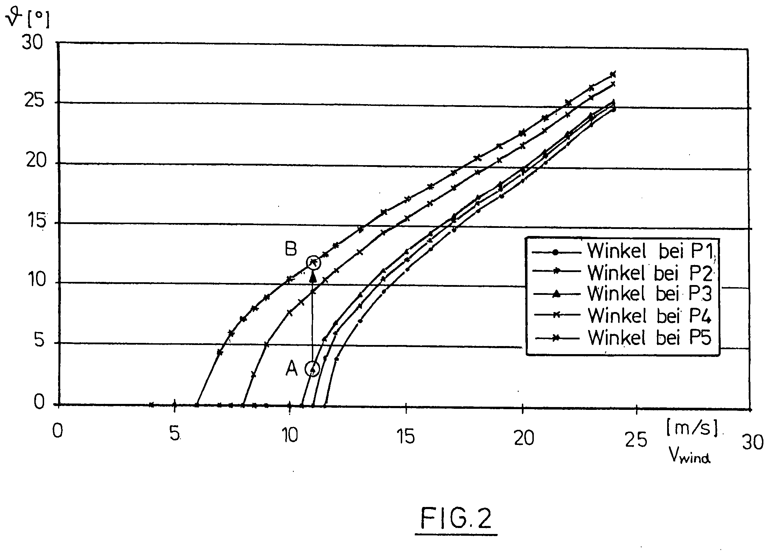

Die Ermittlung des jeweils erforderlichen neuen Blatteinstellwinkels soll anhand des in Figur 2 gezeigten Diagramms erläutert werden. In dem in Figur 2 dargestellten Kennlinienfeld ist auf der x-Achse die aktuelle, auf die Windenergieanlage wirkende Windgeschwindigkeit v_{Wind} in [m/s] aufgetragen. Auf der y-Achse ist der Blatteinstellwinkel υ der Rotorblätter der Windenergieanlage, im vorliegenden Beispiel jedes der drei Blätter, in [°] aufgetragen. In dem Diagramm finden sich fünf Kennlinien für unterschiedliche von der Windenergieanlage über den Generator in ein elektrisches Netz zur Verfügung gestellte Wirkleistungen P1, P2, P3, P4, P5. Dabei gilt P1 > P2 > P3 > P4 > P5. Die Kennlinien geben jeweils die Werte an, die zu der jeweils gewünschten Solldrehzahl des Rotors bzw. Generators führen.

Mit dem Kennfeld ist es möglich, anhand der aktuellen Anlagenleistung und der jeweils geforderten reduzierten Zielleistung der Anlage bei einer aktuellen Windgeschwindigkeit einen Zielblatteinstellwinkel zu ermitteln, bei dem die Rotor- oder Generatordrehzahl wieder die Solldrehzahl annimmt. Dies soll anhand eines Beispiels erläutert werden:
Die Windenergieanlage produziert bei dem in der Figur mit A bezeichneten Arbeitspunkt bei einer Windgeschwindigkeit von ca. 11 m/s eine Wirkleistung P3 bei einem Pitchwinkel von ca. 3°. Wird nun von einem EnergieVersorgungsunternehmen vorgegeben, die Leistung beispielsweise auf eine geringere Leistung P5 zu reduzieren, kann der entsprechende Arbeitspunkt der Windenergieanlage anhand des Kennfeldes ermittelt werden. In dem Diagramm ist er mit B bezeichnet. Es wird somit von der Kennlinie für P3 auf die Kennlinie für P5 gewechselt. Unter der Voraussetzung, dass die Windgeschwindigkeit gleich bleibt, ist bei der reduzierten Leistung P5 eine Erhöhung des Blatteinstellwinkels auf ca. 12° erforderlich, um wieder die Bedingungen für das Erreichen der Solldrehzahl des Rotors bzw. Generators zu schaffen. Für andere Windgeschwindigkeiten kann entlang der Kennlinie der erforderliche Blatteinstellwinkel ermittelt werden. Es wird somit jeweils bei einer vorgegebenen Leistung entlang der entsprechenden Kennlinie geregelt.

Um das Auftreten von schädlichen Überdrehzahlen im Zuge der schnellen Lastreduzierung durch eine schnelle Verringerung des Vorgabewerts, beispielsweise des Generatormoments oder der Generatorleistung, zu vermeiden, wird erfindungsgemäß bereits zum Zeitpunkt des Einleitens der Reduzierung des Vorgabewerts oder sogar zeitlich zuvorkommend die Einstellung der drei Rotorblätter auf den neuen Blatteinstellwinkel von ca. 12° eingeleitet. Dies erfolgt beispielsweise, indem der der Regeleinrichtung 12 vorgegebene minimale Blatteinstellwinkel um einen Offset erhöht wird, wie oben erläutert. Im dargestellten Beispiel wird der neu vorzugebende minimale Blatteinstellwinkel ermittelt, indem der Ist-Blatteinstellwinkel von 3° um einen Offset von 9° erhöht wird. Der neu vorzugebende minimale Blatteinstellwinkel entspricht also dem gewünschten Zielwinkel von 12°. Natürlich ist es ebenso möglich, alternativ oder zusätzlich andere Eingangsgrößen der Regeleinrichtung mit einem Offset zu beaufschlagen, beispielsweise die Solldrehzahl oder die der Regeleinrichtung zugeführte Ist-Drehzahl des Rotors bzw. Generators.

Um anschließend der Regeleinrichtung 12 sukzessive wieder die volle Kontrolle zu übergeben, wird der Offset und damit der der Regeleinrichtung 12 zugeführte minimale Blatteinstellwinkel von dem anfänglichen Maximalwert des Offsets entlang einer zeitlichen Rampe oder einer Funktion wieder bis auf Null reduziert. Anschließend kann die Regeleinrichtung 12 bei der verringerten Wirkleistung und dem verringerten Vorgabewert den Blatteinstellwinkel entsprechend den auftretenden Windschwankungen normal regeln.

## Patentansprüche

1. Verfahren zum Betreiben einer Windenergieanlage, die einen Rotor mit mindestens einem Rotorblatt, dessen Blatteinstellwinkel einstellbar ist, einen mit dem Rotor gekoppelten Generator, und eine Regeleinrichtung, die bei einer Abweichung der Rotor- oder Generatordrehzahl von einer Solldrehzahl den Blatteinstellwinkel des mindestens einen Rotorblatts so einstellt, dass wieder die Solldrehzahl erreicht wird, aufweist,
bei dem eine von der Windenergieanlage über den Generator in ein elektrisches Netz zur Verfügung gestellte elektrische Größe durch eine Verringerung eines Vorgabewerts für den Generator in kurzer Zeit auf einen vorgegebenen Wert reduziert wird,
**dadurch gekennzeichnet, dass** vorausschauend eine Einstellung des mindestens einen Rotorblatts auf einen neuen Blatteinstellwinkel (υ) angesteuert wird, bei dem die Rotor- oder Generatordrehzahl (n_{GI}) bei der reduzierten elektrischen Größe (P1, P2, P3, P4, P5) und der aktuellen Windgeschwindigkeit (v_{Wind}) die Solldrehzahl annimmt.

2. Verfahren nach Anspruch 1, **dadurch gekennzeichnet, dass** der Vorgabewert das vorgegebene Generatormoment oder die vorgegebene Generatorleistung ist.

3. Verfahren nach Anspruch 1, **dadurch gekennzeichnet, dass** die elektrische Größe (P1, P2, P3, P4, P5) die Wirkleistung (P1, P2, P3, P4, P5) der Windenergieanlage ist.

4. Verfahren nach einem der Ansprüche 1 bis 3, **dadurch gekennzeichnet, dass** die Einstellung des neuen Blatteinstellwinkels (υ) erfolgt, indem eine der Regeleinrichtung (12) zugeführte Solldrehzahl (n_{GS}) um einen definierten Offset verringert wird.

5. Verfahren nach einem der vorhergehenden Ansprüche, **dadurch gekennzeichnet, dass** die Einstellung des neuen Blatteinstellwinkels (υ) erfolgt, indem eine der Regeleinrichtung (12) zugeführte Ist-Drehzahl (n_{GI}) um einen definierten Offset erhöht wird.

6. Verfahren nach einem der vorhergehenden Ansprüche, **dadurch gekennzeichnet, dass** die Einstellung des neuen Blatteinstellwinkels (υ) erfolgt, indem ein der Regeleinrichtung (12) zugeführter minimaler Blatteinstellwinkel um einen definierten Offset erhöht wird.

7. Verfahren nach einem der Ansprüche 4 bis 6, **dadurch gekennzeichnet, dass** der Offset von einem anfänglichen Maximalwert mit der Zeit bis auf Null reduziert wird.

8. Verfahren nach einem der Ansprüche 4 bis 7, **dadurch gekennzeichnet, dass** der Offset mittels eines Kennfeldes ermittelt wird.

9. Verfahren nach einem der Ansprüche 4 bis 7, **dadurch gekennzeichnet, dass** der Offset mittels mindestens einer Funktion berechnet wird.

10. Verfahren nach einem der vorhergehenden Ansprüche, **dadurch gekennzeichnet, dass** ein Vergleichen von Rotor- und Generatordrehzahl (n_{GI}) mit einer Grenzdrehzahl und/oder des Vorgabewerts mit einem Grenzvorgabewert erfolgt und die Einstellung auf den neuen Blatteinstellwinkel (υ) nur eingeleitet wird, wenn die Rotor- oder Generatordrehzahl (n_{GI}) oberhalb einer Grenzdrehzahl liegt und/oder wenn der Vorgabewert vor der Verringerung oberhalb eines Grenzvorgabewerts liegt.

11. Windenergieanlage mit einem Rotor mit mindestens einem Rotorblatt, dessen Blatteinstellwinkel einstellbar ist, mit einem mit dem Rotor gekoppelten Generator, und mit einer Regeleinrichtung, die dazu ausgebildet ist, bei einer Abweichung der Rotor- oder Generatordrehzahl von einer Solldrehzahl den Blatteinstellwinkel des mindestens einen Rotorblatts so einzustellen, dass wieder die Solldrehzahl erreicht wird, und mit einer Steuereinrichtung, die dazu ausgebildet ist, eine von der Windenergieanlage über den Generator in ein elektrisches Netz zur Verfügung gestellte elektrische Größe durch eine Verringerung eines Vorgabewerts für den Generator in kurzer Zeit auf einen vorgegebenen Wert zu reduzieren,
**dadurch gekennzeichnet, dass** die Steuereinrichtung (22) dazu ausgebildet ist, vorausschauend eine Einstellung des mindestens einen Rotorblatts auf einen neuen Blatteinstellwinkel (υ) einzuleiten, wobei bei dem neuen Blatteinstellwinkel (υ) die Rotor- oder Generatordrehzahl (n_{GI}) bei der reduzierten elektrischen Größe (P1, P2, P3, P4, P5) und der aktuellen Windgeschwindigkeit (v_{Wind}) die Solldrehzahl (n_{GS}) annimmt.

12. Windenergieanlage nach Anspruch 11, **dadurch gekennzeichnet, dass** der Vorgabewert das vorgegebene Generatormoment oder die vorgegebene Generatorleistung ist.

13. Windenergieanlage nach einem der Ansprüche 11 oder 12, **dadurch gekennzeichnet, dass** die elektrische Größe (P1, P2, P3, P4, P5) die Wirkleistung (P1, P2, P3, P4, P5) der Windenergieanlage ist.

14. Windenergieanlage nach einem der Ansprüche 11 bis 13, **dadurch gekennzeichnet, dass** die Steuereinrichtung (22) dazu ausgebildet ist, den neuen Blatteinstellwinkel (υ) einzustellen, indem eine der Regeleinrichtung (12) zugeführte Solldrehzahl (n_{GS}) um einen definierten Offset verringert wird.

15. Windenergieanlage nach einem der Ansprüche 11 bis 14, **dadurch gekennzeichnet, dass** die Steuereinrichtung (22) dazu ausgebildet ist, den neuen Blatteinstellwinkel (υ) einzustellen, indem eine der Regeleinrichtung (12) zugeführte Ist-Drehzahl (n_{GI}) um einen definierten Offset erhöht wird.

16. Windenergieanlage nach einem der Ansprüche 11 bis 15, **dadurch gekennzeichnet, dass** die die Steuereinrichtung (22) dazu ausgebildet ist, den neuen Blatteinstellwinkel (υ) einzustellen, indem ein der Regeleinrichtung (12) zugeführter minimaler Blatteinstellwinkel um einen definierten Offset erhöht wird.

17. Windenergieanlage nach einem der Ansprüche 11 bis 16, **dadurch gekennzeichnet, dass** die Steuereinrichtung (22) dazu ausgebildet ist, den Offset von einem anfänglichen Maximalwert mit der Zeit bis auf Null zu reduzieren.

18. Windenergieanlage nach einem der Ansprüche 14 bis 17, **dadurch gekennzeichnet, dass** in der Steuereinrichtung (22) ein Kennfeld zur Ermittlung des Offsets hinterlegt ist.

19. Windenergieanlage nach einem der Ansprüche 14 bis 17, **dadurch gekennzeichnet, dass** in der Steuereinrichtung (22) mindestens eine Funktion zur Berechnung des Offsets hinterlegt ist.

20. Windenergieanlage nach einem der Ansprüche 11 bis 19, **dadurch gekennzeichnet, dass** die Steuereinrichtung (22) eine Vergleichseinrichtung aufweist zum Vergleichen der Rotor- oder Generatordrehzahl (n_{GI}) mit einer Grenzdrehzahl und, dass die Steuereinrichtung (22) dazu ausgebildet ist, die Einstellung auf den neuen Blatteinstellwinkel (υ) nur einzuleiten, wenn die Rotor- oder Generatordrehzahl (n_{GI}) oberhalb der Grenzdrehzahl liegt und/oder wenn der Vorgabewert vor der Verringerung oberhalb eines Grenzvorgabewerts liegt.

## Claims

1. Method for operating a wind turbine, the wind turbine having a rotor with at least one rotor blade which has an adjustable pitch angle, a generator coupled to the rotor, and a regulation means which, if there is a deviation of the rotational speed of the generator or rotor from a rotational speed set point, adjusts the pitch angle of the at least one rotor blade such that the rotational speed set point is reached again,
wherein an electrical quantity provided by the wind turbine by means of the generator and fed into an electrical grid is reduced to a predetermined value over a short time duration by reduction of a preset value for the generator, **characterized in that** an adjustment of the at least one rotor blade to a new pitch angle (υ) is actuated anticipatory, wherein at the new pitch angle (υ) the rotational speed of the rotor or generator (n_{GI}) reaches the rotational speed set point at the reduced electrical quantity (P1, P2, P3, P4, P5) and the current wind speed (V_{Wind}).

2. Method according to claim 1, **characterized in that** the preset value is a preset generator torque or a preset generator power.

3. Method according to claim 1, **characterized in that** the electrical quantity (P1, P2, P3, P4, P5) is the active power (P1, P2, P3, P4, P5) of the wind turbine.

4. Method according to any of the claims 1 to 3, **characterized in that** the new pitch angle (υ) is adjusted by way of reducing a rotational speed set point (n_{GS}) supplied to the regulation means (12) by a defined offset.

5. Method according to any of the preceding claims, **characterized in that** the new pitch angle (υ) is adjusted by way of increasing a current rotational speed (n_{GI}) supplied to the regulation means (12) by a defined offset.

6. Method according to any of the preceding claims, **characterized in that** the new pitch angle (υ) is adjusted by way of increasing a minimal pitch angle supplied to the regulation means (12) by a defined offset.

7. Method according to any of the claims 4 to 6, **characterized in that** the offset is reduced over time, starting from an initial maximum value, to zero.

8. Method according to any of the claims 4 to 7, **characterized in that** the offset is determined by means of a characteristic diagram.

9. Method according to any of the claims 4 to 7, **characterized in that** the offset is determined by means of at least one mathematical function.

10. Method according to any of the preceding claims, **characterized in that** a comparison of the rotational speed of the rotor and generator (n_{GI}) to a threshold rotational speed and/or of the preset value to a preset threshold value is made and the adjustment to the new pitch angle (υ) is initiated only if the rotational speed of the rotor or generator (n_{GI}) is above a threshold rotational speed and/or if the preset value prior to its reduction is above a preset threshold value.

11. Wind turbine having a rotor with at least one rotor blade which has an adjustable pitch angle, a generator coupled to the rotor, a regulation means configured to adjust the pitch angle of the at least one rotor blade such that, if there is a deviation of the rotational speed of the generator or rotor from a rotational speed set point, the rotational speed set point is reached again, and a regulation means configured to reduce an electrical quantity which is provided by the wind turbine by means of the generator and fed into an electrical grid to a predetermined value over a short time duration by reduction of a preset value for the generator, **characterized in that** the control means (22) is configured to initiate an adjustment of the at least one rotor blade to a new pitch angle (υ) anticipatory, wherein at the new pitch angle (υ) the rotational speed of the rotor or generator (n_{GI}) reaches the rotational speed set point (n_{GS}) at the reduced electrical quantity (P1, P2, P3, P4, P5) and the current wind speed (v_{Wind}).

12. Wind turbine according to claim 11, **characterized in that** the preset value is a preset generator torque or a preset generator power.

13. Wind turbine according to claim 11 or 12, **characterized in that** the electrical quantity (P1, P2, P3, P4, P5) is the active power (P1, P2, P3, P4, P5) of the wind turbine.

14. Wind turbine according to any of the claims 11 to 13, **characterized in that** the control means (22) is configured to adjust the new pitch angle (υ) by way of reducing a rotational speed set point (n_{GS}) supplied to the regulation means (12) by a defined offset.

15. Wind turbine according to any of the claims 11 to 14, **characterized in that** the control means (22) is configured to adjust the new pitch angle (υ) by way of increasing a current rotational speed (n_{GI}) supplied to the regulation means (12) by a defined offset.

16. Wind turbine according to any of the claims 11 to 15, **characterized in that** the control means (22) is configured to adjust the new pitch angle (υ) by way of increasing a minimal pitch angle supplied to the regulation means (12) by a defined offset.

17. Wind turbine according to any of the claims 11 to 16, **characterized in that** the control means (22) is configured to reduce the offset over time, starting from an initial maximum value, to zero.

18. Wind turbine according to any of the claims 14 to 17, **characterized in that** a characteristic diagram for determining the offset is stored within the control means (22).

19. Wind turbine according to any of the claims 14 to 17, **characterized in that** at least one mathematical function for calculating the offset is stored within the control means (22).

20. Wind turbine according to any of the claims 11 to 19, **characterized in that** the control means (22) is configured with a comparison means for comparing the rotational speed of the rotor or generator (n_{GI}) to a threshold rotational speed and **in that** the control means (22) is configured to initiate the adjustment to the new pitch angle (υ) only if the rotational speed of the rotor or generator (n_{GI}) is above a threshold rotational speed and/or if the preset value prior to its reduction is above a preset threshold value.

## Revendications

1. Procédé de fonctionnement d'une éolienne qui présente un rotor avec au moins une pale de rotor dont l'angle de pas de pale est réglable, un générateur couplé au rotor, et un système de régulation qui, en cas d'écart de la vitesse de rotation du rotor ou du générateur à une vitesse de rotation de consigne, règle l'angle de pas de pale de la pale de rotor au moins au nombre de un de telle sorte que la vitesse de rotation de consigne est de nouveau atteinte,
dans lequel une grandeur électrique mise à disposition dans un réseau électrique par l'éolienne via le générateur est réduite rapidement à une valeur prédéfinie par une diminution d'une valeur spécifiée pour le générateur,
**caractérisé en ce que**,
de manière prévisionnelle, un réglage de la pale de rotor au moins au nombre de un est piloté vers un nouvel angle de pas de pale (υ), dans lequel la vitesse de rotation du rotor ou du générateur (n_{GI}) adopte la vitesse de rotation de consigne pour la grandeur électrique (P1, P2, P3, P4, P5) réduite et la vitesse du vent (V_{wind}) actuelle.

2. Procédé selon la revendication 1, **caractérisé en ce que** la valeur spécifiée est le couple de générateur prédéfini ou la puissance de générateur prédéfinie.

3. Procédé selon la revendication 1, **caractérisé en ce que** la grandeur électrique (P1, P2, P3, P4, P5) est la puissance active (P1, P2, P3, P4, P5) de l'éolienne.

4. Procédé selon l'une des revendications 1 à 3, **caractérisé en ce que** le réglage du nouvel angle de pas de pale (υ) s'effectue par une diminution, correspondant à un décalage défini, d'une vitesse de rotation de consigne (n_{GS}) acheminée au système de régulation (12).

5. Procédé selon l'une des revendications précédentes, **caractérisé en ce que** le réglage du nouvel angle de pas de pale (υ) s'effectue par une augmentation, correspondant à un décalage défini, d'une vitesse de rotation effective (n_{GI}) acheminée au système de régulation (12).

6. Procédé selon l'une des revendications précédentes, **caractérisé en ce que** le réglage du nouvel angle de pas de pale (υ) s'effectue par une augmentation, correspondant à un décalage défini, d'un angle de pas de pale minimal acheminé au système de régulation (12).

7. Procédé selon l'une des revendications 4 à 6, **caractérisé en ce que** le décalage est avec le temps réduit à zéro à partir d'une valeur maximale initiale.

8. Procédé selon l'une des revendications 4 à 7, **caractérisé en ce que** le décalage est déterminé au moyen d'un champ caractéristique.

9. Procédé selon l'une des revendications 4 à 7, **caractérisé en ce que** le décalage est calculé au moyen d'au moins une fonction.

10. Procédé selon l'une des revendications précédentes, **caractérisé en ce qu'**il est effectué une comparaison de la vitesse de rotation du rotor et du générateur (n_{GI}) avec une vitesse de rotation limite et/ou de la valeur spécifiée avec une valeur spécifiée limite, et le réglage au nouvel angle de pas de pale (υ) n'est entrepris que si la vitesse de rotation du rotor ou du générateur (n_{GI}) se situe au-dessus d'une vitesse de rotation limite et/ou si la valeur spécifiée se situe au-dessus d'une valeur spécifiée limite avant la diminution.

11. Eolienne avec un rotor avec au moins une pale de rotor, dont l'angle de pas de pale est réglable, avec un générateur couplé au rotor, et avec un système de régulation qui est constitué pour, en cas d'écart de la vitesse de rotation du rotor ou du générateur à une vitesse de rotation de consigne, régler l'angle de pas de pale de la pale de rotor au moins au nombre de un de telle sorte que la vitesse de rotation de consigne est de nouveau atteinte, et avec un système de commande qui est constitué pour réduire rapidement à une valeur prédéfinie une grandeur électrique mise à disposition dans un réseau électrique par l'éolienne via le générateur par une diminution d'une valeur spécifiée pour le générateur,
**caractérisée en ce que** le système de commande (22) est constitué pour entreprendre de manière prévisionnelle un réglage de la pale de rotor au moins au nombre de un à un nouvel angle de pas de pale (υ), la vitesse de rotation du rotor ou du générateur (n_{GI}) adoptant, pour le nouvel angle de pas de pale (υ), la vitesse de rotation de consigne (n_{GS}) pour la grandeur électrique (P1, P2, P3, P4, P5) réduite et pour la vitesse du vent (V_{Wind}) actuelle.

12. Eolienne selon la revendication 11, **caractérisée en ce que** la valeur spécifiée est le couple de générateur prédéfini ou la puissance de générateur prédéfinie.

13. Eolienne selon l'une des revendications 11 ou 12, **caractérisée en ce que** la grandeur électrique (P1, P2, P3, P4, P5) est la puissance active (P1, P2, P3, P4, P5) de l'éolienne.

14. Eolienne selon l'une des revendications 11 à 13, **caractérisée en ce que** le système de commande (22) est constitué pour régler le nouvel angle de pas de pale (υ) par une diminution, correspondant à un décalage défini, d'une vitesse de rotation de consigne (n_{GS}) acheminée au système de régulation (12).

15. Eolienne selon l'une des revendications 11 à 14, **caractérisée en ce que** le système de commande (22) est constitué pour régler le nouvel angle de pas de pale (υ) par une augmentation, correspondant à un décalage défini, d'une vitesse de rotation effective (n_{GI}) acheminée au système de régulation (12).

16. Eolienne selon l'une des revendications 11 à 15, **caractérisée en ce que** le système de commande (22) est constitué pour régler le nouvel angle de pas de pale (υ) par une augmentation, correspondant à un décalage défini, d'un angle de pas de pale minimal acheminé au système de régulation (12).

17. Eolienne selon l'une des revendications 11 à 16, **caractérisée en ce que** le système de commande (22) est constitué pour, avec le temps, réduire à zéro le décalage à partir d'une valeur maximale initiale.

18. Eolienne selon l'une des revendications 14 à 17, **caractérisée en ce qu'**un champ caractéristique est enregistré dans le système de commande (22) pour la détermination du décalage.

19. Eolienne selon l'une des revendications 14 à 17, **caractérisée en ce qu'**au moins une fonction est enregistrée dans le système de commande (22) pour le calcul du décalage.

20. Eolienne selon l'une des revendications 11 à 19, **caractérisée en ce que** le système de commande (22) présente un système de comparaison pour la comparaison de la vitesse de rotation du rotor ou du générateur (n_{GI}) avec une vitesse de rotation limite, et **en ce que** le système de commande (22) est constitué pour n'entreprendre le réglage au nouvel angle de pas de pale (υ) que si la vitesse de rotation du rotor ou du générateur (n_{GI}) se situe au-dessus de la vitesse de rotation limite et/ou si la valeur spécifiée se situe au-dessus d'une valeur spécifiée limite avant la diminution.
